# EUROPEAN PATENT APPLICATION

(11) **EP 4 640 964 A1**
(43) Date of publication of application: **29.10.2025**
(21) Application number: 23906048.6
(22) Date of filing: 21.12.2023
(51) Int. Cl.: E03D 11/00

(54) **TOILET CONVENIENT FOR PACKING**

(30) Priority: 23.12.2022 CN 202223497897 U
(71) Applicant: Pren Limited, Aberdeen Hong Kong 999077 (HK)
(72) Inventor: LEE, Lung Kong, Hong Kong 999077 (CN); WOO, Pak Fai, Hong Kong 999077 (CN)
(74) Representative: Matter IP Limited
(86) International application number: PCT/CN2023/140641
(87) International publication number: WO 2024/131890

(57) **Abstract**

The present invention provides a convenient and packaging toilet comprising: a toilet seat and an automatic sealing machine. The toilet seat is provided with an annular outlet. The annular outlet extends downward along an inner side to form an annular fixing portion, and the annular fixing portion is connected to an automatic sealing machine. The automatic sealing machine has an annular shape; the automatic sealing machine comprises an annular cover plate connected to the annular fixing portion. The automatic sealing machine comprises movable annular components, heating wires, and cutting blades. The movable annular components comprises a built-in communication unit adapted to wirelessly communicate with an external communication device. A heating wire and the cutting blade are installed on an inner wall of each movable annular component.

## Description

### Technical Field

The present invention relates to the field of toilets, and in particular to a convenient packaging toilet.

### Background

With the continuous evolution of technology, traditional toilets are equipped with more intelligent functions, including the detection of toilet seat temperature, intelligent flushing, and other functions. However, the treatment of excrement is generally carried out by directly flushing into the sewage system. Sometimes, when the excrement is difficult to clean, a large amount of clean water is required. This is not environmentally friendly. Some toilets are designed to process excrement by manual packaging which is likely to leak excrement during the manual packaging process. Alternatively, the excrement is packaged in heated plastic bags when pressing the button on the smart toilet. Then, the toilet seat is manually lifted, and the easy-tear line of the plastic bag is manually torn off. The plastic bag is then removed. It cannot be integrated with modern intelligent communication equipment to achieve smart packaging of excrement. This exposes the technical problems such as lack of human-machine intelligence and cumbersome excrement treatment procedures. At the same time, the toilet lacks an integrated design that can easily be assembled and disassembled, making it impossible to conveniently clean the excrement that may exist inside the toilet.

### Summary of the Invention

In order to overcome the disadvantages of the prior art, the present invention provides a convenient packaging toilet, which is directed to solve the technical problems of leaking excrement during manual packaging, lack of human-machine intelligent integration, cumbersome excrement treatment procedures, and lack of integral design. The present invention aims to achieve human-machine intelligent integration, simplified excrement treatment procedures, and integral design.

In order to solve the above problems, the technical solutions adopted by the present invention are as follows:
A convenient and packaging toilet comprising: a toilet seat and an automatic sealing machine; wherein the toilet seat is provided with an annular outlet; the annular outlet extends downward along an inner side to form an annular fixing portion, and the annular fixing portion is connected to an automatic sealing machine; the automatic sealing machine has an annular shape; the automatic sealing machine comprises an annular cover plate connected to the annular fixing portion; the automatic sealing machine comprises movable annular components, heating wires and cutting blades; the movable annular components comprise a built-in communication unit adapted to wirelessly communicate with an external communication device; the heating wire and the cutting blade are installed on an inner wall of each movable annular component.

The annular cover plate has a storage box installed thereon, and the storage box is adapted to store plastic packaging bags.

Furthermore, the movable annular components comprise a communication unit and a conductive unit. The movable annular components are configured to connect to an external communication device through the communication unit and to connect to the heating wire through the conductive unit. After receiving an external communication signal, the movable annular components can automatically join together at an annular center of the automatic sealing machine.

The heating wire is vertically attached to the inner wall of the movable annular component. The cutting blade comprises a cutting surface that is vertically arranged on the inner wall of the movable annular component. The cutting blade is located between a front end and a rear end of the heating wire. The heating wire is made of metal material.

Furthermore, the automatic sealing machine comprises an annular cover plate. The annular cover plate is mounted on the annular fixing portion with quick-release screws.

The toilet seat is made of the following materials: Polypropylene (PP), or Acrylonitrile butadiene styrene (ABS) materials, and antimicrobial plastic additives.

Furthermore, the automatic sealing machine has an annular bottom plate. The annular bottom plate is made of anti-slip material.

Furthermore, the annular outlet, the annular cover plate, and the annular bottom plate have the same inner annular size.

Compared with the prior art, the present invention has the following advantages: the annular outlet of the toilet seat extends downward along an inner wall to form an annular fixing portion. The automatic sealing machine adopts an annular design. The toilet seat can be connected through the annular fixing portion to the annular cover plate of the automatic sealing machine. As such, the toilet of the present invention forms an integral part which can easily be assembled and disassembled. At the same time, the automatic sealing machine is adapted to communicate wirelessly with external communication devices and transmit signals with external communication devices to control the movable annular components. The automatic packaging process of plastic packaging bags is completed with the heating wires and cutting blades.

The present invention is further described in detail below in conjunction with the accompanying drawings and specific implements.

### Description of the Drawings

In order to more clearly illustrate the technical solutions of the embodiments of the present invention, the drawings required for the implementations of the embodiments will be briefly introduced below. Obviously, the drawings in the following represent some embodiments of the present invention only. Those skilled in the art can also derive other drawings based on these drawings without applying inventive steps.
Fig, 1 is a schematic diagram of the appearance of a convenient packaging toilet according to an embodiment of the present invention;
Fig, 2 is a cross-sectional schematic diagram of a convenient packaging toilet before use according to an embodiment of the present invention;
Fig, 3 is a cross-sectional schematic diagram of a convenient packaging toilet after use according to an embodiment of the present invention.

### Detailed Implementations of the Invention

The embodiments of the present invention are described in detail below with reference to the accompanying drawings.

The following describes the embodiments of the present invention through specific examples, and those skilled in the art can easily understand other advantages and effects of the present invention from the contents disclosed in this specification. Obviously, the described embodiments are only some particular embodiments of the present invention, rather than all the embodiments. The present invention can also be implemented or applied through other different specific embodiments. The details in this specification can also be modified or changed in various ways based on different viewpoints and applications without departing from the spirit of the present invention. Subject to any inconsistency, it should be noted that any part of the following embodiments and features in the embodiments can be combined. Based on the embodiments in the present invention, all other embodiments obtained by ordinary skill in the art without making inventive steps are within the scope of protection of the present invention.

A convenient packaging toilet, comprising: a toilet seat 1, and automatic sealing machine 2.

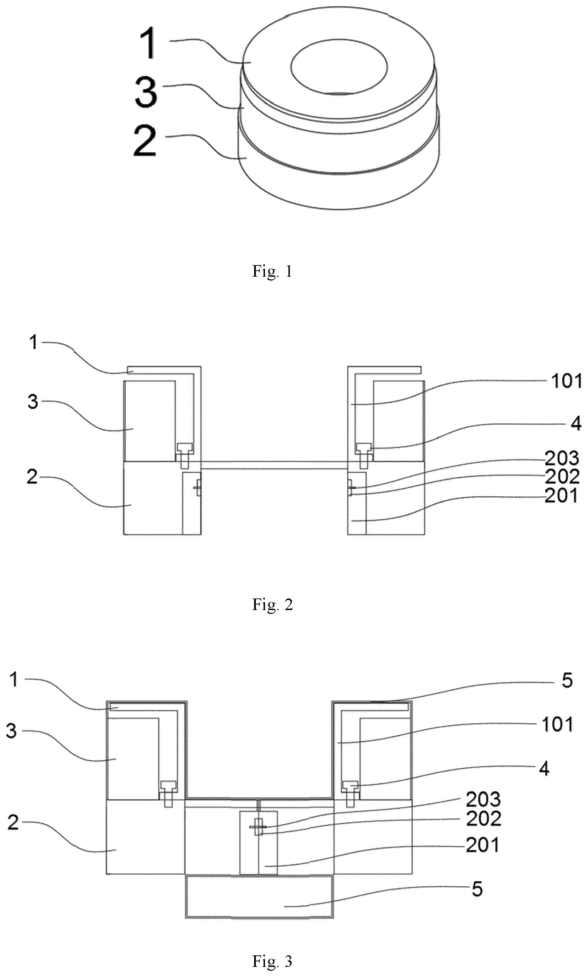

As shown in Fig. 1 the toilet seat 1 comprises an annular outlet. The toilet seat 1 is adapted to discharge excrement through the annular outlet. The automatic sealing machine 2 is adapted to package and seal the excrement.

As shown in Fig. 2, the annular outlet of toilet seat 1 extends downward along an inner side to form an annular fixing portion. 101. The annular fixing portion 101 connects to the automatic sealing machine 2. The automatic sealing machine 2 has an annular shape. The automatic sealing machine 2 comprises an annular cover plate connected to a lower end of the annular fixing portion 101 by a predefined number of quick-release screws 4.

Automatic sealing machine 2 comprises movable annular components 201, heating wires 202, and cutting blades 203. The movable annular components are adapted to wirelessly communicate with an external communication device through a communication unit. A heating wire and a cutting blade are installed on an inner wall of each movable annular component.

The annular cover plate has a storage box installed thereon, and the storage box is adapted to store plastic packaging bags 5.

Specifically, the movable annular components 201 comprise a communication unit and a conductive unit. The movable annular components 201 are configured to connect to an external communication device through the communication unit and to connect to the heating wire through the conductive unit. The external device may comprise a remote control, a sensor, a smart communication device, etc. The communication method may be wireless communication. The movable annular components 201 are configured to connect the heating wire with the conductive unit 202. The conductive unit 202 has an input end connected to a power source. The conductive unit 202 has a control end connected to a communication unit. The conductive unit 202 has an output end connected to the heating wire 202. The sensors may comprise visual sensors, odor sensors, sound sensors, thermal imaging sensors, etc. The sensors are adapted to communicate with the smart communication device. Alternatively, the sensors are adapted to communicate with the smart communication device and / or remote control through the communication unit. When the user is using the toilet or uses the toilet for a period of time, various sensors will actively collect data, and transmit the data to the smart communication device of the external device for analysis and storage, etc. By analyzing the color, odor, thermal images, and sound made by the user during excretion, it is possible to obtain the health data of the user.

The present invention adopts a modular design. Different module combinations can be selected according to different users or application scenarios. The module combinations comprise various combinations of sensors, remote controls, external devices, etc.

The heating wire 202 is vertically attached to the inner wall of the movable annular component 201. The cutting blade 203 has a cutting surface that is vertically arranged on the inner wall of the movable annular component 201. The cutting blade 203 is located between a front end and a rear end of the heating wire 202. The heating wire is made of metal material. The cutting surface of the cutting blade 203 is slightly higher than the thickness of the heating wire 202.

As shown in Fig. 3, when in use, the plastic packaging bag 5 is retrieved from the storage box 3, unfolds from portion 101 to the annular outlet of the toilet seat 1, thereby 360° surrounds the annular outlet of the toilet seat 1, and enters into the automatic sealing machine 2 through the toilet seat 1. The arrangement of the plastic packaging bag 5 shields the gap between the toilet seat 1 and the automatic sealing machine 2. When the user uses the toilet of the present invention, excrement will not seep out of the gaps, so that there will be no contamination to the components of the toilet. This will reduce damage to the toilet. The next user will not be indirectly infected when using the toilet. The protection of the interior of the toilet can reduce the reliance on maintenance staff. This will minimize the risk of infection during maintenance. This will increase the stability of the toilet so that the toilet can be used to its maximum benefit.

The excrement is discharged from the annular outlet of the toilet seat 1 and falls into the plastic sealing bag 5.

The plastic packaging bag 5 containing excrement falls into a packaging region of the automatic sealing machine. At the time of sealing the packaging bag of the excrement, a communication signal is sent through an external communication device. The movable annular components 201 after receiving the external communication signal can automatically actuate to join together towards the annular center of the automatic sealing machine 2. At the same time, the heating wires 202 are heated up. The heating wires are adapted to fuse the plastic packaging bag 5 that is closed at the annular center. The cutting blade 203 cuts the packaging part of the plastic packaging bag 5 to complete the packaging of excrement.

The cutting blade 203 cuts the packaging part of the plastic packaging bag 5. At the same time, the bottom of the plastic packaging bag 5 for next use is cut off and then sealed completely, so that the plastic packaging bag 5 for next use cannot leak any excrement. This will reduce pollution from excrement.

Further, it is preferable to have four quick release screws 4 which are respectively secure to the four directions around the annular cover plate of the automatic sealing machine 2. The four directions are in 12 o'clock, 3 o'clock, 6 o'clock, and 9 o'clock directions. By turning the quick-release screws in the four directions clockwise, the automatic sealing machine 2 can easily be assembled and disassembled.

The toilet seat 1 is made of the following materials: Polypropylene (PP), or Acrylonitrile butadiene styrene (ABS) materials, and antimicrobial plastic additives. The antibacterial plastic additives may include cationic compounds, nano-silver antibacterial agents, and nano-silver ions. The toilet seat 1 is resistant to impact, heat, low temperature, and chemicals, and it is strong enough to support the user.

Furthermore, the toilet seat 1 may comprise a seat cushion thereon. Depending on the needs of different users, the seat cushions may comprise with different shapes, materials, heights, and softness and hardness.

In one embodiment of the present invention, the toilet preferably comprises a display screen, which is arranged on the side of the automatic sealing machine 2 or the storage box 3. The signal input end of the display screen is connected to the various sensors for real-time display of various sensing data for the user to understand the usage conditions. The display screen is adapted to communicate signals with smart devices which can receive and display the analyzed data so that the user can monitor his or her health condition. The display screen is also adapted to receive remote commands from the remote control that is communicating signals therewith.

Preferably, the heating wire 202 is made of metal, so that the heating wire 202 can be heated up quickly.

Preferably, the annular bottom plate of the automatic sealing machine 2 is made of non-slip material, so that the annular bottom plate of the automatic sealing machine 2 can be used as a base of the toilet.

Furthermore, the annular outlet of the toilet seat 1, the annular cover plate of the automatic sealing machine 2, and the annular bottom plate of the automatic sealing machine 2 have the same inner annular size. As such, the plastic sealing bag 5 can be smoothly packaged and sealed after receiving the excrement.

Furthermore, all parts below the toilet seat (including the automatic sealing machine 2 and storage box 3, as well as the supporting structure below the toilet) are covered by a completely integrated seamless enclosure. The bottom of the enclosure is provided with an annular outlet directing to the plastic bag 5. With this design, all parts of the automatic sealing machine 2 and the storage box 3 are integrally covered, which obviously enhances the waterproof effect of the product.

According to an embodiment of the present invention, the annular outlet of the toilet seat 1 extends downward along the inner side to form an annular fixing portion 101. The automatic sealing machine 2 has an annular design. The toilet seat 1 can be connected to the annular cover plate of the automatic sealing machine 2 through the annular fixing portion 101 to form an integral design, which facilitates the easy installation and removal of the toilet. At the same time, the automatic sealing machine 2 can communicate wirelessly with external communication devices. By communicating signals with external communication devices, the movable annular components 201 are adapted to be actuated. The automated packaging and sealing of the packaging bag 5 process can be performed with the heating wires 202 and the cutting blades 203.

The present embodiments are, therefore, to be considered in all respects as illustrative and not restrictive. It will be appreciated by persons skilled in the art that numerous variations and/or modifications may be made to the invention as shown in the specific embodiments without departing from the spirit or scope of the invention as broadly described.

## Claims

1. A convenient and packaging toilet comprising: a toilet seat and an automatic sealing machine; wherein the toilet seat is provided with an annular outlet; the annular outlet extends downward along an inner side to form an annular fixing portion, and the annular fixing portion is connected to an automatic sealing machine; the automatic sealing machine has an annular shape; the automatic sealing machine comprises an annular cover plate connected to the annular fixing portion; the automatic sealing machine comprises movable annular components, heating wires and cutting blades; the movable annular components comprise a built-in communication unit adapted to wirelessly communicate with an external communication device; the heating wire and the cutting blade are installed on an inner wall of each movable annular component.

2. A convenient and packaging toilet according to Claim 1, wherein the annular cover plate has a storage box installed thereon, wherein the storage box is adapted to store plastic packaging bags.

3. A convenient and packaging toilet according to Claim 1, wherein the movable annular components comprises a communication unit and a conductive unit; wherein the movable annular components are configured to connect to an external communication device through the communication unit and to connect to the heating wire through the conductive unit; such that after receiving an external communication signal, the movable annular components can automatically join together at an annular center of the automatic sealing machine.

4. A convenient and packaging toilet according to Claim 1, wherein the external communication device comprises remote controls, sensors, and/or smart communication devices; wherein the sensors comprise visual sensors, smell sensors, sound sensors, and/or thermal imaging sensors; wherein the sensors are signally connected to the smart communication device, or signally connected through a communication unit to the smart communication devices and/or remote control.

5. A convenient and packaging toilet according to Claim 1, wherein the heating wire is vertically attached to the inner wall of the movable annular component and the cutting blade comprises a cutting surface that is vertically arranged on the inner wall of the movable annular component.

6. A convenient and packaging toilet according to Claim 5, wherein the cutting blade is located between a front end and a rear end of the heating wire.

7. A convenient and packaging toilet according to Claim 5, wherein the heating wire is made of metal material.

8. A convenient and packaging toilet according to Claim 1, wherein the annular cover plate is mounted on the annular fixing portion with quick-release screws.

9. A convenient and packaging toilet according to Claim 1, wherein the toilet seat is made of materials comprising Polypropylene (PP), or Acrylonitrile butadiene styrene (ABS) materials, and antimicrobial plastic additives.

10. A convenient and packaging toilet according to Claim 1, wherein the automatic sealing machine has an annular bottom plate. The annular bottom plate is made of anti-slip material.

11. A convenient and packaging toilet according to Claim 1, wherein the annular outlet, the annular cover plate, and the annular bottom plate have the same inner annular size.

12. A convenient and packaging toilet according to Claim 1, wherein the automatic sealing has a storage space below for temporarily storing sealed excrement.

13. A convenient and packaging toilet according to Claim 12, further comprising a display screen, wherein the display is arranged on the side of the automatic sealing machine or the storage box; wherein the display screen has a signal input end connected to the various sensors for real-time display of various sensing data for the user to understands usage conditions.

14. A convenient and packaging toilet according to Claim 13, wherein the display screen is adapted to communicate signals with smart devices which can receive and display the analyzed data so that the user can monitor the user's health conditions, wherein the display screen is also adapted to receive remote commands from the remote control that is communicating signals therewith.

15. A convenient and packaging toilet according to any one of Claims 1 to 14, wherein the toilet seat comprises a seat cushion thereon.

16. A convenient and packaging toilet according to any one of Claims 1 to 14, wherein all parts below the toilet seat are covered by a complete integrated seamless enclosure; wherein a bottom part of the enclosure comprises an annular outlet directing to the plastic bag.
